# EUROPEAN PATENT APPLICATION

(11) **EP 4 224 431 A1**
(43) Date of publication of application: **09.08.2023**
(21) Application number: 22216495.6
(22) Date of filing: 23.12.2022
(51) Int. Cl.: G06V 10/56, G06V 10/145

(54) **A METHOD FOR DETECTING DEAD INSECTS AND A SYSTEM FOR IMPLEMENTING THEREOF**

(30) Priority: 07.02.2022 WO PCT/PL2022/050005
(71) Applicant: "Proteine Resources" spolka z ograniczona Odpowiedzialnoscia, 32-091 Maslomiaca (PL)
(72) Inventor: WLODARCZYK, Konrad, 32-091 Maslomiaca (PL)
(74) Representative: Górska, Anna

(57) **Abstract**

A method for detecting dead insects, including fragments thereof, characterised in placing the insects within the range of a UV radiation source (1) and within the field of view of an image-recording device (2) connected to a computer (3), after which an image of the insects covered by UV radiation is recorded using the image-recording device (2), the image thus obtained is then loaded into the computer's memory and processed using a photograph processing software that uses saturation image thresholding to divide the image into objects and background according to differences in saturation. The object of the invention is also a system for implementing this method.

## Description

The object of the invention is a method for detecting dead insects, including fragments thereof, for use especially in insect rearing, breeding or processing, and a system for implementing this method.

Industrial-scale insect rearing and breeding is one of the fastest developing methods for obtaining alternative animal protein. For its development, however, it is essential to reduce the high costs of manual handling in breeding, particularly to be able to identify dead individuals. Automation and robotisation of insect rearing, breeding and processing processes is the key to achieving profitability in order to compete with existing methods for obtaining protein to be used for food and feed, that are so destructive to our planet's ecosystem. The use of machine learning algorithms and the application of artificial intelligence to control and optimise production processes in insect rearing, breeding and processing requires the provision of adequate quantity and quality of data from vision systems, the said data replacing the caretaker's organoleptic assessment during manual handling. For this purpose, it is possible to use images of insects generated under ultraviolet light.

The phenomenon of luminescence of organisms has been known to mankind for hundreds of years. As early as in antiquity, Aristotle and Pliny the Elder wondered about the source of light that could be observed in some dead fish and in decayed wood [Biron K: Fireflies, dead fish and a glowing bunny: a primer on bioluminescence. BioTeach J., 2003; 1: 19-26].

The phenomenon of bioluminescence in living insects is known and is caused by luciferase occurring in the beetle of the species Photinus pyralispyralis [Luker K.E., Luker G.D.: Applications of bioluminescence imaging to antiviral research and therapy: multiple luciferase enzymes and quantitation. Antiviral Res., 2008; 78: 179187]. Its presence has also been demonstrated in some species of the families Lampiridae, Elateridae or Phengodidae [Stevani C.V., Oliveira A.G., Mendes L.F., Ventura F.F., Waldenmaier H.E., Carvalho R.P., Pereira T.A.: Current status of research on fungal bioluminescence: biochemistry and prospects for ecotoxicological application. Photochem. Photobiol., 2013; 89: 1318-1326].

The phenomenon of fluorescence of certain organisms, which is the emission of light under the influence of a stimulating agent, is also known. An example thereof may be the fluorescence of scorpions under the effect of ultraviolet radiation. In this case, the effect is the emission of light in the vicinity of the green-blue colour. It is beta-carboline and 7-hydroxy-4-methylcoumarin found in the outer layer of chitin that are responsible for the fluorescence.

Insects in industrial production are usually separated according to developmental stage and size and are kept in high-density mono groups. In the event of unfavourable environmental conditions or the presence of a pathogen, mortality occurs in waves, starting with individuals and then spreading to increasing numbers thereof until the whole group, i.e. all individuals from one breeding container, becomes extinct. With a sufficiently high ratio of dead individuals, even when the lethal factor is no longer present, the whole breeding groups die out. Therefore, sufficiently early detection of the first dead individuals is crucial, thereby providing the opportunity for an early response to identify and correct adverse factors causing mortality. Bringing the process to a halt often saves the entire production from collapsing completely. It is also crucial to ensure the safety of production.

Dead insects in larval form can, although it is extremely complicated, be identified by means of vision systems that detect movement. However, in the case of species or life stages where movement is negligible (e.g. pupae), detection of dead individuals in this way is not possible or takes too long to be applied effectively in a continuous production process. The only way to do this is to visually assess the changing appearance of the dead individual, e.g. changes in colour and/or shape, as influenced by decomposition/desiccation processes. However, it takes as long as seven days after death for the first signs of these processes to appear, depending on the species and environmental conditions, by which time the whole group is usually infected and it is too late to implement remedial processes.

The aim of the invention is therefore to develop a method for detecting dead insects that allows for the earliest possible detection of dead individuals before lesions visible under white light emerge. Indeed, it unexpectedly turned out that the use of ultraviolet radiation of different wavelengths allows for precise detection of dead insects, days before the emergence of any symptoms allowing the phenomenon to be detected in any other way, despite the fact that neither the phenomenon of fluorescence of dead insects nor the phenomenon of reflection of light by dead individuals was known until now.

The object of the invention is a method for detecting dead insects, including fragments thereof, by placing the insects within the range of a UV radiation source and within the field of view of an image-recording device connected to a computer, after which an image of the insects covered by UV radiation is recorded using the image-recording device, the image thus obtained is then loaded into the computer's memory and processed using a photograph processing software that uses saturation image thresholding to divide the image into objects and background according to differences in saturation.

Preferably, the saturation value of the object image is 0-70 greyscale units and the saturation value of the background image is 71-255 greyscale units.

Preferably, the wavelength of UV radiation is from 365 nm to 395 nm.

Preferably, the insects are those of the order Coleoptera.

Preferably, the insects are those of the species Tenebrio molitor, Alphitobius diaperinus or Zophobas morio.

Preferably, the insects are at different stages of development.

Preferably, the image-recording device is a digital camera or a digital camcorder.

Preferably, images are analysed by means of a computer equipped with a computer software equipped with machine learning algorithms.

The object of the invention is also a system for detecting dead insects comprising a UV radiation source and an image-recording device connected to a computer, and an insect tray, the operation of the UV radiation source and the image-recording device being synchronised and electronically controlled by means of the computer.

Preferably, the insect tray is a container, a conveyor belt and/or a conveyor in a conveyor line.

Preferably, the system is provided with a conveyor line for moving the insects, electronically controlled by the computer.

Preferably, the computer is equipped with a screen.

Preferably, the image-recording device is a digital camcorder, smart camcorder, digital camera or smart glasses.

Preferably, the computer is equipped with a computer software equipped with machine learning algorithms.

Preferably, the UV radiation source and the image-recording device are integrated into a single unit.

To implement the method according to the invention, both simple manual devices for manual operation and advanced illuminators in robotised process lines can be used. Whenever ultraviolet light is used to detect dead individuals, they can be identified earlier than by organoleptic methods or other vision systems.

The object of the invention in an embodiment is shown in the drawing, where:

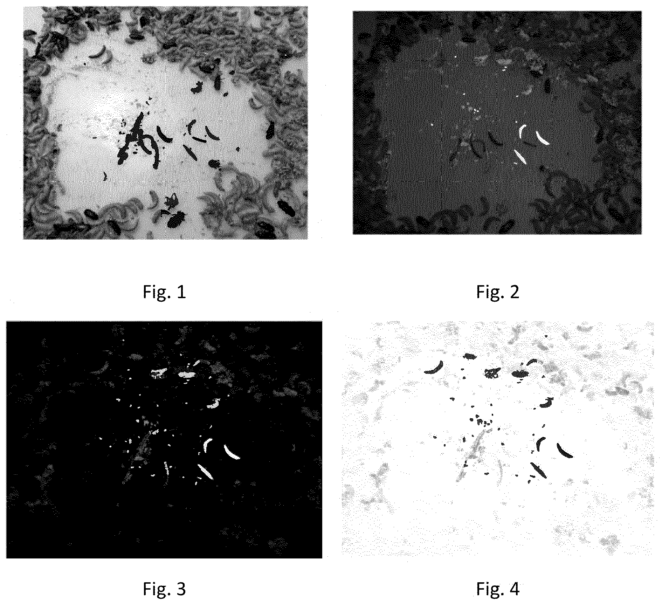

- Fig. 1: is a photograph of insects under white light, in which dead individuals cannot be distinguished;
- Fig. 2: is a photograph under UV light, which shows objects that are clearly brighter;
- Fig. 3: is the green channel of the image;
- Fig. 4: is the saturation image;
- Fig. 5: is a fragment of the saturation image, containing the object and a graph of the particular selected pixel values in greyscale;
- Fig. 6: shows a general diagram of the system for detecting dead insects;
- Fig. 7: shows a general diagram of the system for detecting dead insects, where an image-recording device integrated with a UV light source is shown;
- Fig. 8: shows the system for detecting dead insects in an isometric view.

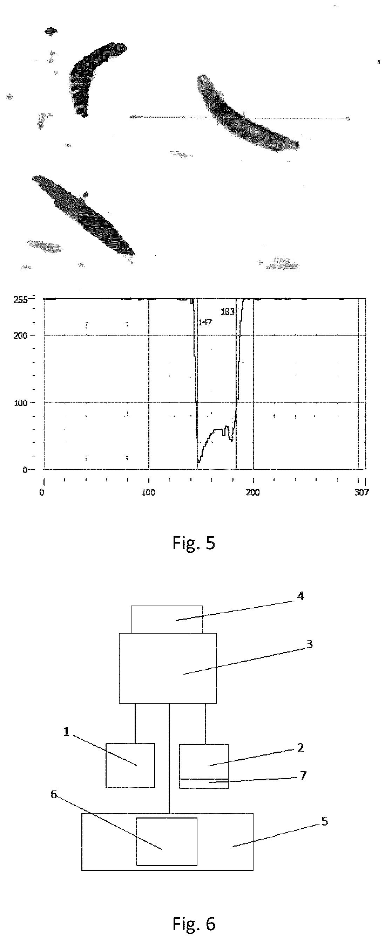

Fig. 5 shows a fragment of the saturation image obtained as a result of processing a photograph of a container containing insects taken under UV light. A line of pixels is marked in the image. Below the image there is a graph showing the greyscale values of these pixels. The graph demonstrates that the majority of pixels have values higher than 200, while some pixels have values from 0 to about 70.

### Example 1:

A breeding container containing the pupae of the species A. diaperinus in the period of transformation into an imago was placed in a breeding rack, after which the container **6** was placed in the field of visibility of an image-recording device **2** in the form of a camera, and within the range of a UV radiation source **1.** Over the course of six consecutive days, insects placed in the container were exposed to UV light and photographs were taken at the same time. Photographs of this container were also taken under white light. The photographs taken under UV light were each subjected to processing and analysis in the Halcon environment in the following steps:
a) a photograph was loaded into a computer program for photograph processing,
b) the image was split into RGB, i.e. red, green, blue, channels,
c) HSV transformation of the image was performed, resulting in a saturation image,
d) the saturation image was smoothed out,
e) the saturation image was thresholded, thereby dividing the image into an object region and a background in terms of their greyscale values so that the object region is constituted by the areas with values in the range 0-70, while the background is constituted by the areas with values in the range 71-255 (the greyscale ranges from 0 to 255), and it was observed that the object region differs from most of the background by more than 100 greyscale units, i.e. the background areas mainly have values in the range of 170-255 units,
f) holes in the objects were filled, i.e. background areas surrounded on all sides by areas classified as objects were also classified as objects,
g) the object region was separated into particular objects,
h) a selection of regions was made by choosing regions that meet the condition of an area greater than or equal to 3900 pixels, thus filtering out objects too small to be an image of an insect at the stage of development under study,
i) for the purpose of information and visualisation of the result, the areas of the regions were calculated and the image of the regions was superimposed on the red channel of the RGB image.

On the first day, information about existence of one region was obtained from the image analysis performed. It turned out that this region corresponded in the photograph to a single pupa which upon inspection appeared to be dead although under white light, the decomposition processes taking place were not yet visible. On successive days, the number of regions obtained from image analysis increased, and each time, the regions actually corresponded to dead individuals. It was observed that the ability of the dead individuals to reflect light initially increased and then decreased from the fifth day onwards. On the sixth day, having analysed the images, no regions were obtained, that is, no fluorescent or UV-reflective objects were visible in the image. Simultaneously, on the same day, the effects of the advanced decomposition processes of individuals that had been identified as dead on the basis of the image analyses carried out on the previous days were already visible under white light.

Unexpectedly, it turned out that the generation of a bright image of dead individuals under UV radiation occurs at different intensities at different wavelengths, but the effects are already achieved at the commonly used UV365 nm and UV395 nm. The observed phenomenon occurred several hours after death (it is difficult to determine the precise moment when life processes cease in the case of an insect) and persisted until changes in appearance, resulting from the decomposition process, visible under white light emerged. It was taken into account that, under high humidity conditions, decomposition processes cause the colour of dead individuals to change under white light with a negligible change in shape. In a low-humidity environment, the colour change of the desiccated dead individuals is marginal, while the shape is significantly affected. It was observed that the UV-induced phenomenon occurred regardless of the level of humidity and temperature of the environment, from the moment of death until the appearance of signs of decomposition or desiccation of the dead individuals.

### Example 2:

A breeding container with insects of the species Tenebrio molitor at different development stages was subjected to a screening process. After mechanically separating the insects from food debris and frass, white light followed by UV light with a wavelength of 395 nm was directed at a selected area in the central part of the container, where larval-stage individuals were present. On the display of a monochrome image-recording device **2** equipped with a bandpass filter **7** transmitting a narrow band of light with a wavelength of 500-555 nm +/-10 nm, an image was obtained in which clearly fluorescent objects could be distinguished, after which these objects were analysed in the Halcon environment in the following steps:
a) a photograph was loaded into a computer program for photograph processing,
b) the saturation image was smoothed out,
c) the saturation image was thresholded, thereby dividing the image into an object region and a background in terms of their greyscale values so that the object region is constituted by the areas with values in the range 0-70, while the background is constituted by the areas with values in the range 71-255 (the greyscale ranges from 0 to 255),
d) holes in the objects were filled, i.e. background areas surrounded on all sides by areas classified as objects were also classified as objects, with an added condition that the fills should only be in the area range of 1 to 25 pixels,
e) the object region was separated into particular objects,
f) a selection of regions was made by choosing those of the regions that are large enough to fit a circle with a radius that is at least 14.967, at most 50 pixels, thereby filtering out objects too small to be an image of an insect at the stage of development under study,
g) for the purpose of information and visualisation of the result, the areas of the regions were calculated and the contours of the regions were superimposed on the monochromatic photograph.

This analysis demonstrated that the three objects clearly fluorescing and/or reflecting light were dead individuals that had not yet developed signs of decomposition processes visible under white light. One individual was mechanically damaged during the separation process.

### Example 3:

A breeding substrate in the form of wheat bran and randomly selected individuals of the species Tenebrio molitor in the metamorphosis stage were placed in a Petri dish. The dish was exposed to white light followed by UV radiation with 365 nm and 395 nm wavelengths. The image was captured by an image-recording device 2 in the form of a digital camera and then analysed using the Halcon environment in the following steps:
a) a photograph was loaded into a computer program for photograph processing,
b) the image was split into RGB, i.e. red, green, blue, channels,
c) HSV transformation of the image was performed, resulting in a saturation image,
d) the saturation image was smoothed out,
e) the saturation image was thresholded, thereby dividing the image into an object region and a background in terms of their greyscale values so that the object region is constituted by the areas with values in the range 0-70, while the background is constituted by the areas with values in the range 71-255 (the greyscale ranges from 0 to 255), and it was observed that the object region differs from most of the background by more than 100 greyscale units, i.e. the background areas mainly have values in the range of 170-255 units,
f) holes in the objects were filled, i.e. background areas surrounded on all sides by areas classified as objects were also classified as objects,
g) the object region was separated into particular objects,
h) a selection of regions was made by choosing those of the regions that are large enough to fit a circle with a radius that is at least 19.287, at most 50 pixels, thereby filtering out objects too small to be an image of an insect at the stage of development under study,
i) for the purpose of information and visualisation of the result, the areas of the regions were calculated and the image of the regions was superimposed on the red channel of the RGB image.

On a computer display **4**, it was clearly observable that some individuals were clearly fluorescing (and/or reflecting UV light) and some were not. After detailed analysis of all individuals, it was determined that the objects that fluoresce (and/or reflect UV light) are dead pupae, and the objects that do not fluoresce (or reflect UV light) are larval forms in an advanced stage of decomposition, moults and one individual that is a live pupa.

### Example 4:

A breeding container with insects of the order Coleoptera was placed on a conveyor line **5**, after which the studied breeding container was immobilised within the field of view of a camera **2** equipped with a bandpass filter **7** transmitting a narrow band of light with a wavelength of 485-550 nm +/-10 nm, connected to a computer **3** and within range of a UV radiation source **1**. Then, the UV radiation source **1** emitting radiation with a wavelength of 365 nm directed at the breeding container was activated. Then, an image from the camera 2 was observed on a display **4** of the computer **3** and processed using a computer software interpreting the brightness of the areas in the Halcon environment in the following steps:
a) a photograph was loaded into a computer program for photograph processing,
b) the image was split into RGB, i.e. red, green, blue, channels,
c) HSV transformation of the image was performed, resulting in a saturation image,
d) the saturation image was smoothed out,
e) the saturation image was thresholded, thereby dividing the image into an object region and a background in terms of their greyscale values so that the object region is constituted by the areas with values in the range 0-70, while the background is constituted by the areas with values in the range 71-255 (the greyscale ranges from 0 to 255), and it was observed that the object region differs from most of the background by more than 100 greyscale units, i.e. the background areas mainly have values in the range of 170-255 units,
f) the object region was eroded using a circular structuring element with a radius of 7.5 pixels; consequently, areas too small to be an insect at the stage of development under study were filtered out,
g) the object region was separated into particular objects,
h) a selection of regions was made by choosing those of the regions that met the surface area condition of 12500 to 45000 pixels, thus selecting objects that represent individual insects,
i) particular objects were marked;
j) the object region was structured with a circular area with a radius of 7.5 pixels in order to restore the original size of the objects,
k) holes in the objects were filled, i.e. background areas surrounded on all sides by areas classified as objects were also classified as objects, with an added condition that the fills should only be in the area range of 1 to 25 pixels,
l) for the purpose of information and visualisation of the result, the areas and the number of the regions were calculated and the contours of the regions were superimposed on the RGB image.

In the image from the camera **2**, the areas that were clearly brighter (i.e. with a saturation that differed from most of the background by more than 100 grayscale units) were noted, so the container was removed from the conveyor line **5** and the individuals representing the brighter areas were manually removed therefrom, after which the removed individuals were identified as dead.

### Example 5:

Insects of the species Zophobas morio were placed on a conveyor line **5** and then immobilised within the field of view of a camera **2** connected wirelessly to a computer **3** and within the range of a UV radiation source **1**. Then, the UV radiation source **1** emitting radiation with a wavelength of 395 nm directed at the insects was activated. Then, an image from the camera **2** was observed on a display **4** of the computer **3** and processed using a computer software interpreting the brightness of the areas in the following steps:
a) a photograph was loaded into a computer program for photograph processing,
b) the image was split into RGB, i.e. red, green, blue, channels,
c) HSV transformation of the image was performed, resulting in a saturation image,
d) the saturation image was smoothed out,
e) the saturation image was thresholded, thereby dividing the image into an object region and a background in terms of their greyscale values so that the object region is constituted by the areas with values in the range 0-70, while the background is constituted by the areas with values in the range 71-255 (the greyscale ranges from 0 to 255), and it was observed that the object region differs from most of the background by more than 100 greyscale units, i.e. the background areas mainly have values in the range of 170-255 units,
f) holes in the objects were filled, i.e. background areas surrounded on all sides by areas classified as objects were also classified as objects,
g) the object region was separated into particular objects,
h) a selection of regions was made by choosing those of the regions that are large enough to fit a circle with a radius that is at least 17.458, at most 72.426 pixels, thereby filtering out objects too small to be an image of an insect at the stage of development under study,
i) for the purpose of information and visualisation of the result, the areas of the regions were calculated and the image of the regions was superimposed on the red channel of the RGB image.

In the image from the camera **2**, the areas that were clearly brighter (i.e. with a saturation that differed from most of the background by more than 100 grayscale units) were noted, so the individuals representing the brighter areas were manually removed from the conveyor line, after which these individuals were identified as dead.

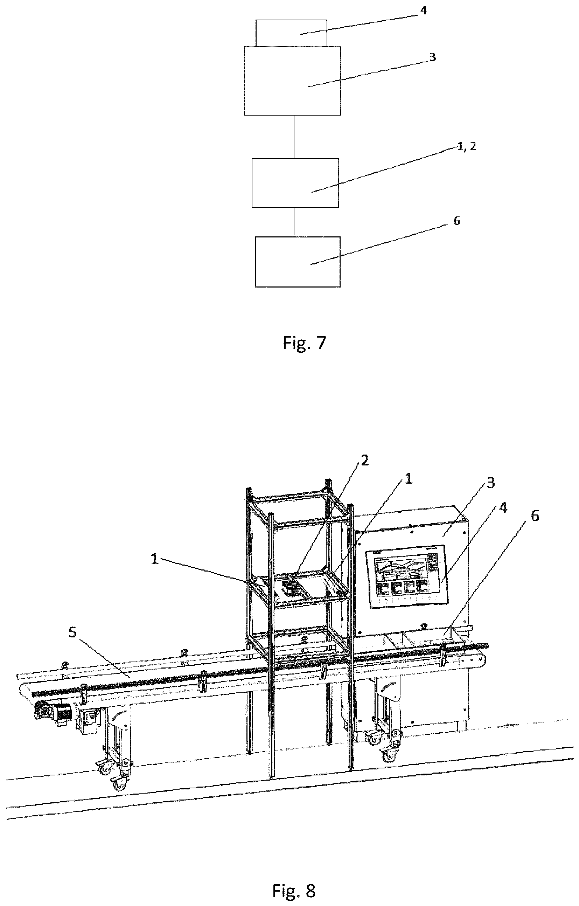

As shown in the accompanying drawing in Fig. 6, a system for detecting dead insects comprises a UV radiation source **1** and a camera **2** equipped with a bandpass filter **7** connected to a computer **3**, preferably provided with a screen **4**, and equipped with a software program interpreting the brightness of the areas, preferably based on machine learning algorithms. The UV radiation source **1** and the camera **2** can be integrated into a single unit, as shown in Fig. 7. The system for detecting dead individuals can be connected to a conveyor line **5** along which insects are moved, preferably placed in containers. Preferably, the operation of the UV radiation source **1**, the camera **2** as well as the conveyor line **5** are synchronised and electronically controlled by the computer **3**.

The use of UV radiation in vision systems passing information to machine learning and artificial intelligence algorithms is taking them to a level previously unattainable, i.e. enabling them to not only correspond with the efficiency and complexity of analysis to the human factor, but to outperform it. With the use of computer software based on machine learning algorithms, including those created using learned neural networks, it is possible to accurately determine the time of death of insects based on the intensity of ultraviolet reflectance and/or the fluorescence effect.

The method according to the invention can find application especially in the rearing and breeding as well as processing of insects. Early detection of dead individuals and their immediate elimination from further processing is critical to the quality and safety of the entire product batch. The method according to the invention is basically the only way to detect such individuals early. It is also an extremely efficient and low-cost method which can be used on production lines of any speed of product movement.

The method according to the invention can also be used to detect dead individuals and/or their fragments in frass. Depending on the frass separation technology used, the insects may be damaged in the process and their fragments, or whole dead individuals, may enter the final product. The ability to quickly identify them directly on the frass processing line is crucial for production efficiency and safety.

Furthermore, the method according to the invention is also ideal for detecting the first signs of cannibalism, both among larvae and mature individuals, as well as at one of the most critical moments of an insect's life cycle, during the metamorphosis period, where the larvae, intensively searching for nutrients, damage fresh pupae. Early enough detection of cannibalism offers the opportunity to supplement feed mixtures with suitable ingredients aimed at eliminating it.

The system according to the invention and as shown in an embodiment in the accompanying Fig. 6-8 comprises a UV radiation source **1** and an image-recording device **2** (in the form of, e.g., a digital camcorder, a smart camcorder, a digital camera or smart glasses) connected to a computer **3**, as well as an insect tray **6** which can preferably be a container, a conveyor belt or a (vibrating, bucket, trough-type) conveyor in a conveyor line, wherein the operation of the UV radiation source **1** and the image-recording device **2** are synchronised and electronically controlled by the computer **3**. The computer **3** is equipped with a computer software equipped with machine learning algorithms. The UV radiation source **1** and the image-recording device **2** can be integrated into a single unit, such as a smart camcorder or smart glasses. Preferably, the computer **3** can be equipped with a screen **4** and the trays **6** can move along the conveyor line **5.**

## Claims

1. A method for detecting dead insects, including fragments thereof, **characterised in** placing the insects within the range of a UV radiation source (1) and within the field of view of an image-recording device (2) connected to a computer (3), after which an image of the insects covered by UV radiation is recorded using the image-recording device (2), the image thus obtained is then loaded into the computer's memory and processed using a photograph processing software that uses saturation image thresholding to divide the image into objects and background according to differences in saturation.

2. The method according to claim 1, **characterised in that** the saturation value of the object image is 0-70 greyscale units and the saturation value of the background image is 71-255 greyscale units.

3. The method according to claim 1, **characterised in that** the wavelength of UV radiation is from 365 nm to 395 nm.

4. The method according to claim 1, **characterised in that** the insects are those of the order Coleoptera.

5. The method according to claim 3, **characterised in that** the insects are those of the species Tenebrio molitor, Alphitobius diaperinus or Zophobas morio.

6. The method according to claim 1, **characterised in that** the insects are at different stages of development.

7. The method according to claim 1, **characterised in that** the image-recording device (2) is a digital camera or a digital camcorder.

8. The method according to claim 1, **characterised in that** images are analysed by means of a computer (3) equipped with a computer software equipped with machine learning algorithms.

9. A system for detecting dead insects with the method according to claim 1, **characterised in that** it comprises a UV radiation source (1) and an image-recording device (2) connected to a computer (3), and an insect tray (6),
wherein the operation of the UV radiation source (1) and the image-recording device (2) are synchronised and electronically controlled by means of the computer (3).

10. The system according to claim 9, **characterised in that** the insect tray (6) is a container, a conveyor belt and/or a conveyor in a conveyor line.

11. The system according to claim 9, **characterised in that** it is provided with a conveyor line (5) for moving the insects, electronically controlled by the computer (3).

12. The system according to claim 9, **characterised in that** the computer (3) is equipped with a screen (4).

13. The system according to claim 9, **characterised in that** the image-recording device (2) is a digital camcorder, smart camcorder, digital camera or smart glasses.

14. The system according to claim 9, **characterised in that** the computer (3) is equipped with a computer software equipped with machine learning algorithms.

15. The system according to claim 9, **characterised in that** the UV radiation source (1) and the image-recording device (2) are integrated into a single unit.
